# EUROPEAN PATENT APPLICATION

(11) **EP 1 956 358 A1**
(43) Date of publication of application: **13.08.2008**
(21) Application number: 07101878.2
(22) Date of filing: 07.02.2007
(51) Int. Cl.: G01N 21/03, G01N 21/27, G01N 21/11, B01L 3/00

(54) **Sample holder**

(71) Applicant: FOSS Analytical AB, 263 21 Höganäs (SE)
(72) Inventor: Ylikangas, Roger, 26351, Höganäs (SE)
(74) Representative: Johansson, Magnus

(57) **Abstract**

The present invention relates to a sample holder for an optical analyzer comprising a sample compartment for holding a sample to be analyzed and a reference compartment for holding a reference. The invention further relates to a sample holder having a housing that includes a first limiting surface, a second limiting surface arranged substantially opposite to the first limiting surface, and a distance wall arranged to define the sample compartment and the reference compartment between the first and second limiting surfaces. The invention also relates to an optical analyzer including a sample holder and radiation detector.

## Description

### Technical Field of the Invention

The present invention relates to a sample holder for an optical analyzer and to an optical analyzer including the sample holder.

### Background of the Invention

Optical analyzers are used to perform analysis of samples, such as providing a measure of the amount of one or more of the constituents of the sample or a measure of a characteristic of the sample. For example, near infrared (NIR) optical analyzers are commonly used in agriculture to determine oil, protein and moisture content of grain, fat content of meat, protein, lactose and urea content of milk, wine quality and wine making compositions, and the hardness of wheat.

A plurality of known optical analyzers, having different types of sample holders, are known. However, the optical analyzers are often mechanically complicated and/or the sample holders are often difficult to fill.

In published patent application US 2005/0213087, a measuring arrangement having a disc shaped measuring cuvette is described. The measuring cuvette is formed from two disks assembled to create a volume in between them for containing the sample. Further, the measuring cuvette is arranged to be rotated in order to mix the sample. This prior art measuring cuvette is complicated to fill with sample and calibration of the measuring arrangement is difficult.

### Summary of the Invention

It is an object of the present invention to provide an improved sample holder.

The object is achieved by means of a sample holder for an optical analyzer according to claim 1 and an optical analyzer according to claim 13. Embodiments of the invention are disclosed in the dependent claims.

In particular, according to a first aspect of the invention, a sample holder for an optical analyzer comprising a sample compartment for holding a sample to be analyzed and a reference compartment for holding a reference sample, are provided.

The advantage of arranging a sample compartment for holding a sample and a reference compartment for holding a reference sample in a single sample holder is that the process of measuring may be facilitated. A further advantage is that the quality of the results from the measurements may be increased as a result of the facilitated calibration of the measuring equipment.

According to one embodiment of the invention, the sample holder comprises a housing in which the sample compartment and the reference compartment are formed.

According to yet another embodiment, the sample holder further comprises connection means for connecting the sample holder to an actuator. This may facilitate the quality of the measuring results in that the mixing of a sample may be facilitated and provide a more reliable statistical base.

In one embodiment, the connection means is arranged to connect the sample holder to a rotary actuator.

Further, at least a portion of the sample compartment and a portion of the reference compartment, included in the sample holder, may be arranged at equal distances from a rotary axis of the sample holder. Such an embodiment further facilitates the process of measuring and calibrating the measuring equipment because a shift from measuring the sample to measuring the reference may be controlled by means of a single rotary machine. This also makes it possible to simplify the measuring device as the shift from sample measuring to reference measuring and mixing may be operated by means of one single rotary machine.

In one embodiment, the housing of the sample holder includes a first limiting surface, a second limiting surface arranged substantially opposite to the first limiting surface, a distance wall arranged to define the sample compartment and the reference compartment between the first and second limiting surfaces.

Moreover, the sample compartment may be configured with a sample analyzing area arranged to enable light passing from a sample inside the sample compartment to outside the sample compartment.

In another embodiment the sample compartment of the sample holder is provided with a channel inaccessible to the sample and arranged to reduce the volume of the sample compartment at the sample analyzing area.

Further the channel may be adjustable to enable adjustment of the reduction of the volume. In this way it may, for example, be possible to adjust the length of a direct optical path through the sample compartment. This makes it possible to optimize the amount of sample in the area of the sample compartment. The optimal amount of sample may vary depending on the type of sample being analyzed. The channel may be a tube.

Further, the tube may be slidably arranged through the second limiting surface in order to adjust the length of the channel. This makes it possible to optimize the amount of sample in the area of the sample compartment without exchanging the sample holder for another sample holder presenting the required parameters.

According to another aspect of the invention, an optical analyzer comprises a sample holder according to the invention and a radiation detector arranged to detect radiation exiting from the sample compartment.

A further scope of applicability of the present invention will become apparent from the detailed description given below. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

Other features and advantages of the present invention will become apparent from the following detailed description of a presently preferred embodiment, with reference to the accompanying drawings, in which
Fig 1 shows a sample holder, according to one embodiment of the invention, and a mount, the sample holder being shown without a front cover,
Fig 2 shows a perspective view of the sample holder and mount of Fig 1,
Fig 3 shows a perspective view of the sample holdermount of Fig 1, the sample holder being shown with a front cover,
Fig 4 shows a perspective view of the sample holder and mount of Fig 1,
Fig 5 schematically illustrates an optical analyzer for transmission measurements and the sample holder,
Fig 6 schematically illustrates an optical analyzer for reflective measurements and the sample holder, and
Fig 7a-c shows variations of a cross section of the sample holder shown in Figs 1-4.

### Detailed Description of a Presently Preferred Embodiment

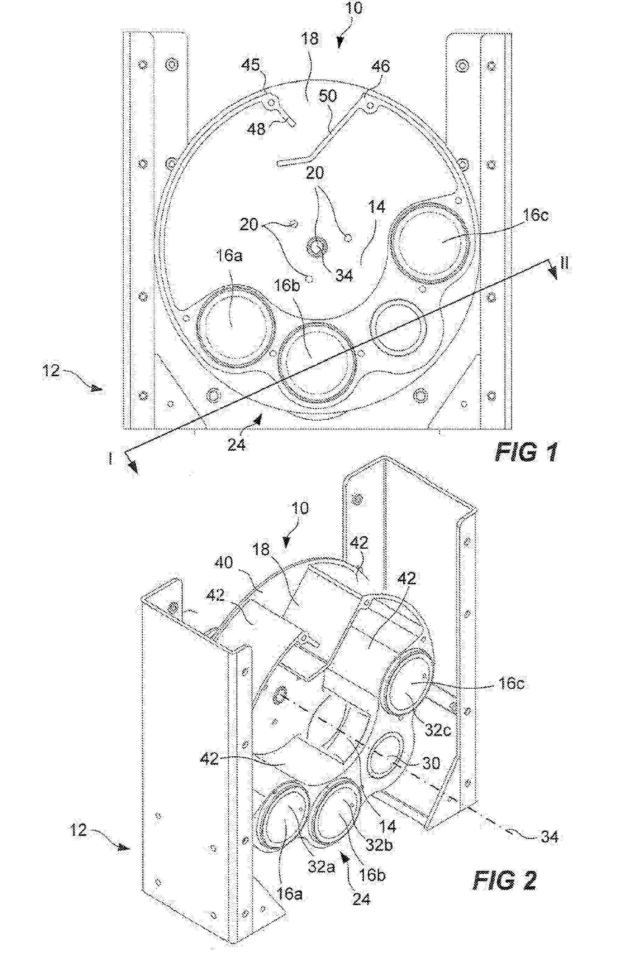

In Figs 1-4, an embodiment of the inventive sample holder 10 for optical analysis is schematically shown positioned in a sample holder mount 12. The sample holder 10 includes a sample compartment 14, reference compartments 16a-c, an opening 18 for supplying the sample to and emptying the sample from the sample compartment 14 and connection means 20 for connecting a drive axle 22.

In this particular embodiment the sample holder 10 includes three reference compartments 16a-c. However, the number of reference compartments 16a-c may vary in different applications. In a sample holder 10 including three reference compartments 16a-c one reference compartment may contain a black level reference, one reference sample compartment may contain a white level reference, and one reference compartment may contain nothing but air. The reference compartments 16a-c may also contain a filter material and/or a reference sample.

Further, the sample holder 10 includes a housing 24 arranged to form the sample compartment 14, the reference compartment 16a-c, and the opening 18.

View ports 30 and 32a-c are arranged in the housing 24, a sample compartment view port 30 at the sample compartment 14 and reference compartment view ports 32a-c at each reference compartment 16a-c. These view ports 30, 32a-c, is also designated to be analyzing areas for the sample or the references, i.e. view port 30 is the sample analyzing area and view ports 32a-c are reference analyzing areas. In the present embodiment the view ports 30 and 32a-c are arranged to allow optical access to the sample in the sample compartment 14 and to the references in the reference compartments 16a-c, respectively, by means of an optical measuring system. In one embodiment, the sample compartment view port 30 is an opening in the housing, the opening being covered by a translucent or transparent material in order to keep the sample inside the sample compartment 14 and still be able to perform optical analyses of the sample. The choice of translucent or transparent material depends on the optical analysis to be performed. The reference compartments 16a-c may also be covered by a translucent or transparent material if the reference material of respective reference compartments 16a-c require it in order to stay in said reference compartments 16a-c. However, in some cases there is no need for covering the reference compartments 16a-c.

In one embodiment the sample holder is arranged to be rotatable around a center axis 34. This is advantageous in that the sample may be easily rearranged between measuring sessions in order to achieve statistically acceptable results. Rotating the sample holder also permits each of the optical measurements to be performed always at the same area of the view port 30, as well as 32a-c, through a same portion of translucent or transparent material. In this manner, any effect due to variations in the properties of that material which may otherwise occur if measurements were made through different portions of a translucent or transparent material of an analyzing area which effectively extends over the entire sample compartment is minimized. Further, the sample holder may be connected to a rotational actuator, e.g. a rotary motor of essentially any type, in order to rotate the sample holder around the center axis 34, the center axis 34 then being a rotary axis 34. The rotation of the rotational actuator may be transferred to the sample holder by means of the axel 22.

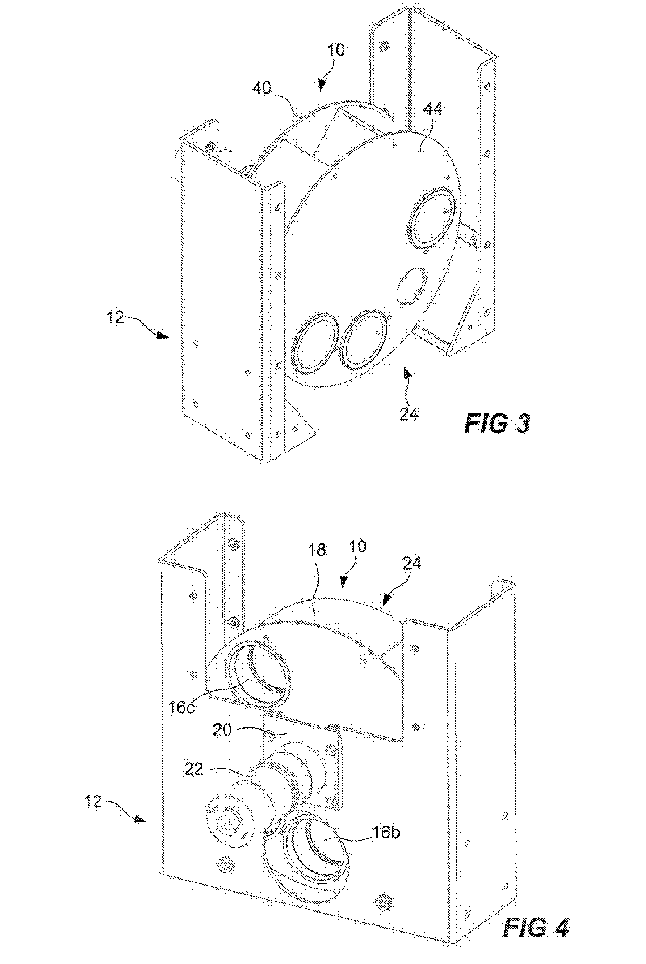

The analyzing areas of the sample holder, i.e. the sample analyzing area and the reference analyzing areas, may further be arranged at essentially equal radial distances from the rotary axis 34. This arranging of the analyzing areas facilitates calibration measurements of a reference and may even be performed as part of the rotation for rearranging or stirring the sample. Moreover, the driving and control of an analysis system utilizing the sample holder may be simplified as calibrating and sample measuring may be performed by the same motion and, thus, only one actuator need to be used for both functions. The housing may include a first limiting surface 40, in this description of a specific embodiment referred to as base plate 40, onto which distance walls 42, in this description of a specific embodiment referred to as compartment walls 42, are arranged in order to separate the different compartments from each other. The housing may also include a second limiting surface 44, in this description of a specific embodiment referred to as front cover 44, depicted in Fig 3, closing the housing. The view ports 30 and 32a-c at the analyzing areas may be arranged as openings in the front cover 44. If so, the translucent or transparent cover of the compartments is mounted to the compartment walls of the compartments requiring such a cover. The translucent or transparent cover may also be integrated in the front cover 44, which may be opaque except for these translucent or transparent portions.

In one embodiment, the compartment walls of the sample compartment are partly shared by the reference compartments, as visible in Figs 1-2. However, it is possible to arrange a sample compartment having essentially no compartment walls in common with the reference compartments and, thus, to arrange reference compartments having essentially no compartment walls in common with each other or the sample compartment. This may be achieved by arranging self contained compartments attached to each other by some structure element. In one specific embodiment the reference compartment may be in the form of a channel at least partially surrounded by the sample compartment but inaccessible to the sample.

According to one embodiment, the opening 18 for supplying the sample to and emptying the sample from the sample compartment 14 is arranged in an outer wall of the compartment wall 42 enclosing the sample compartment. From wall edges 45 and 46, defining the opening 18, a first portion of the wall 48 and a second portion of the wall 50 are extended into the sample compartment. The first portion 48 is arranged to hinder sample material reaching the wall edge from falling out of the sample compartment while the sample holder is rotating in a first direction and the second wall portion 50 is arranged to deflect sample material past the opening 18 while the sample holder is rotating in said first direction. However, if the sample holder is rotated in a second direction, opposite to the first direction, sample material may fall out of the sample holder. The first wall portion 48 extends towards the second wall portion 50 leaving a passage between the first wall portion 48 and the second wall portion 50. The second wall portion 50 extends past an imagined line between the end of the first wall portion 48 and the rotary axis 34 of the sample holder. By this arranging of the opening 18 of the sample compartment, the opening may be kept open even during rotation with sample in the sample compartment without any sample material leaving the sample compartment. Therefore, no controller, no actuator and no moving parts are needed for opening and closing the opening for supplying or emptying the sample compartment. Hence the sample holder becomes less complicated and more robust.

In another embodiment, not shown, a cover plate is arranged covering the opening 18. The cover plate may be arranged to be operated by means of the same motor rotating the sample holder. This may be accomplished by arranging a hindering means in the sample holder mount 12, an opening means in the cover plate and means for keeping the cover plate closed when not affected by an interaction between the hindering means and the opening means. The assembly is arranged so that when the sample holder is rotated in a forward direction the hindering means does not affect the cover plate, but when the motor driving the sample holder is reversed, the hindering means interacts with the opening means, removing the cover plate from covering the opening.

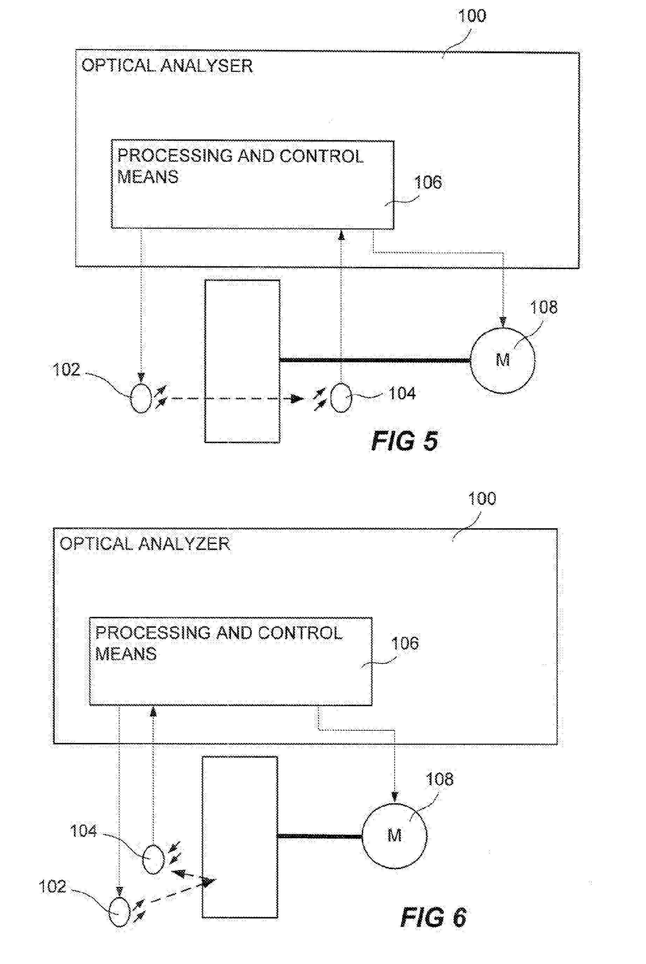

Now referring to Figs 5-6, the sample holder 10 is arranged to be mounted in an optical analyzer 100, e.g. a spectroscope. Examples of samples to be measured are agriculture products such as wheat, barley, canola, rapeseed, corn, and soybeans, however other types of samples may also be measured. The functionality and design of optical analyzers is known to the skilled person. The optical analyzer 100 includes a radiation source 102, a radiation detector 104, and a processing and control means 106. Further, the optical analyzer 100 includes an actuator 108 for moving the sample holder 10. In one embodiment the actuator is an electrical motor 108 arranged to rotate the sample holder 10.

The radiation source 102 may be a broad band near infrared radiation source, e.g. a halogen light source, or it may be a light emitting diode or any radiation source suitable for providing the desired radiation. The desired radiation may be anything from infrared to ultraviolet radiation, the selection depends on the particular application.

The radiation detector 104 may be any known detector suitable for detecting the radiation from the radiation source and reflected by, or passed through, the sample. In one embodiment, the radiation detector 104 and the radiation source 102 are arranged on opposite sides of the sample holder 10 in order to perform transmission measurements on the sample, depicted in Fig 5. In another embodiment, the radiation detector 104 and the radiation source 102 are arranged on the same side of the sample holder 10 in order to perform reflective measurements on the sample, depicted in Fig 6.

The processing and control means 106 is arranged to control the radiation source 102 and the electric motor 108 and to receive a signal from the radiation detector that is to be processed by the processing and control means.

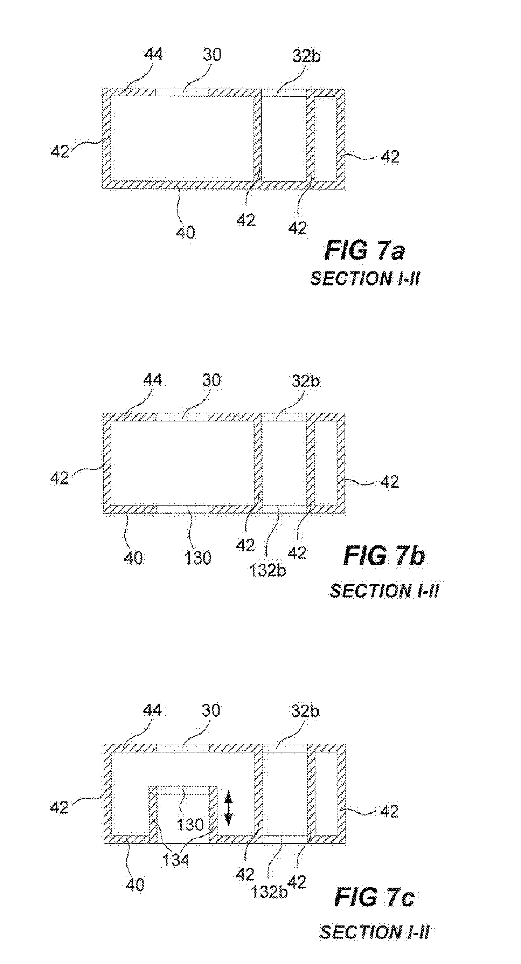

According to one embodiment of the sample holder according to the invention, the sample analyzing area and the reference analyzing areas include said view ports 30 and 32a-c, depicted in Figs 1-4. Three different embodiments of the section I-II from Fig 1 are depicted in Figs 7a-c.

In the embodiment of Fig 7a the sample analyzing area is provided with a view port 30 allowing optical access to the sample through the front cover 44 of the housing and allowing reflective measurements on the sample. The reference analyzing area is provided with a view port 32b allowing optical access to a reference through the front cover 44 of the housing and allowing reflective measurements on the reference.

In the embodiment of Fig 7b the sample analyzing area is provided with a first view port 30 through the front cover 44 for allowing radiation from the radiation source 102 passing into the sample compartment and interacting with the sample held there. Moreover, the sample analyzing area also includes a second view port 130 in the base plate 40 allowing radiation passing through the first view port 30 and the sample to exit for detection by the detector 104 for performing transmission measurements. The reference analyzing area is also provided with a first view port 32b through the front 44 plate and a second view port 132b through the base plate 40 in order to enable transmission measurements on the reference held between the two view ports. Accordingly, the radiation used in the transmission measurement of the reference is directed through the first view port 32b into the reference compartment and radiation for detection exits through the second view port 132b. Additional reference compartments may be identically arranged.

The embodiment of Fig 7c is substantially identical to the embodiment of Fig 7b. This embodiment differs from the embodiment of Fig 7b in that the second view port 130 of the sample analyzing area is arranged at a distance from the base plate 40 towards the front cover 44. The volume between the second view port 130 and the base plate is kept free from sample by walls 134. By arranging the second view port 130 closer to the first view port 30, the direct optical path between the two view ports 30 and 130 through the sample is made shorter. In one specific embodiment the distance between the second view port 130 and the first view port 30 may be varied in order to vary the length of the direct optical path between the two view ports 30 and 130 through the sample. This may be achieved by arranging the second view port 130 at the end of a tube sliding through the base plate, as indicated by the double-headed arrow in Fig 7c.

An optical analysis session using a sample holder 10, according to one embodiment of the invention, in an optical analyzer 100, as previously described, may be performed as follows. The sample holder is prepared with reference samples in the reference compartments which may be performed in advance of the measuring session. The sample to be analyzed is filled into the sample compartment. Then the sample holder is rotated to position a reference analyzing area in front of the radiation source and the radiation detector. A calibration measurement is performed on the reference sample. The sample holder may then be rotated for performing additional calibration measurements on the other references. Then the sample holder is rotated to position the sample analyzing area in front of the radiation source and the radiation detector in order to perform measurements on the sample. As discussed earlier, the sample holder may be rotated in order to mix the sample before further measurements are performed. During these rotations, the optical analyzer may be recalibrated or adjusted by simply making the rotation of the sample holder stop for a moment in a position placing a reference analyzing area in front of the radiation source and the radiation detector.

According to one embodiment, the measuring session may be performed as described below.

Before starting the measuring session, the references are inserted into the reference compartments and controlled, or a sample holder being prepared with the desired references is picked. Accordingly, the sample holder may be arranged to have exchangeable references, allowing the user physical access to the reference compartments, or the sample holder may be arranged to have fixed references, i.e. the references are not exchangeable.

The sample holder 10 is rotated into position for filling with sample material and the sample material is filled into the sample compartment. Thereafter, one of the reference analyzing areas is rotated into position at the radiation source and the radiation detector and a reference measurement is performed. This reference measurement may be used to calibrate the optical analyzer. Measurements of the other references may also be performed now. However, they may also be performed later in-between measurements of the sample. When this or these reference measurements have been performed, the sample analyzing area is rotated into position at the radiation source and the radiation detector and a sample measurement is performed. After the sample measurement is performed, the sample holder is rotated in order to mix the sample and then a second sample measurement is performed as described above. Reference measurements may be performed any time during the measuring session by simply positioning a reference analyzing area at the radiation source and the radiation detector and performing a measurement. At the end of the measurement session the sample holder is positioned, once more by rotation, having the opening positioned in a substantially downward direction. Then the sample in the sample holder is emptied by reversing the motor and rotating the sample holder in a direction opposite to the direction used when mixing the sample.

According to one embodiment the sample holder is integrated in the optical analyzer. However, according to another embodiment the sample holder is easily detachable from the optical analyzer facilitating replacement of the sample holder.

## Claims

1. A sample holder (10) for an optical analyzer comprising:
a sample compartment (14) for holding a sample to be analyzed, and
a reference compartment (16a-c) for holding a reference.

2. Sample holder according to claim 1, further comprising a housing (24) in which the sample compartment (14) and the reference compartment (16a-c) are formed.

3. Sample holder according to any one of claims 1 or 2, further comprising connection means (20) for connecting the sample holder to an actuator (108).

4. Sample holder according to claim 3, wherein the connection means (20) is arranged to connect the sample holder to a rotary actuator (108).

5. Sample holder according to claim 4, wherein at least a portion of the sample compartment (14) and a portion of the reference compartment (16a-c) are arranged at equal distances from a rotary axis (34) of the sample holder.

6. Sample holder according to any one of claims 2-5, wherein the housing (24) includes:
a first limiting surface (40),
a second limiting surface (44) arranged substantially opposite to the first limiting surface,
a distance wall (42) arranged to define the sample compartment (14) and the reference compartment (16a-c) between the first and second limiting surfaces.

7. Sample holder according to claim 6, wherein the sample compartment (14) is configured with a sample analyzing area arranged to enable light passing from a sample inside the sample compartment to outside the sample compartment.

8. Sample holder according to claim 7, wherein the sample compartment (14) is provided with a channel inaccessible to the sample and arranged to reduce the volume of the sample compartment at the sample analyzing area.

9. Sample holder according to claim 8, wherein the channel is adjustable to enable adjustment of the reduction of the volume.

10. Sample holder according to any one of claims 8 or 9, wherein the channel is formed by a tube sealed from the sample of the sample compartment.

11. Sample holder according to claim 10, wherein the tube is slidably arranged through the second limiting surface (44) in order to adjust the length of the channel.

12. Sample holder according to any one of claims 6-11, wherein the reference compartment (16a-c) is in the form of a channel at least partially surrounded by the sample compartment (14) but inaccessible to the sample.

13. An optical analyzer (100) comprising:
a sample holder (10) in accordance with any one of claims 1-12, and
a radiation detector (104) arranged to detect radiation exiting from the sample compartment (14).
